# EUROPÄISCHE PATENTANMELDUNG

(11) **EP 2 528 045 A1**
(43) Veröffentlichungstag der Anmeldung: **28.11.2012**
(21) Anmeldenummer: 12168894.9
(22) Anmeldetag: 22.05.2012
(51) Int. Cl.: G07F 19/00, G06Q 20/20, G06Q 20/32, G06Q 20/42

(54) **Verfahren und Diensterechner sowie System zur kartenlosen Authentifizierung**

(30) Priorität: 26.05.2011 DE 102011103292
(71) Anmelder: Wincor Nixdorf International GmbH, 33106 Paderborn (DE)
(72) Erfinder: Karlisch, Thomas, 33154 Salzkotten (DE); Pape-Kampmeier, Udo, 33104 Paderborn (DE)
(74) Vertreter: 2K Patentanwälte Blasberg Kewitz & Reichel

(57) **Zusammenfassung**

Offenbart wird ein Verfahren zur kartenlosen Authentifizierung eines Benutzers gegenüber einer Akzeptanzstelle, zum Ausführen einer Transaktion an der oder mittels der Akzeptanzstelle, wobei der Benutzer bei einer Zentralstelle unter Zuordnung einer Benutzer-Identifikationsinformation, die dem Benutzer zur Verfügung steht, einer Telekommunikationsnummer und von Kartendaten registriert ist. Die Akzeptanzstelle übermittelt eine von dem Benutzer eingegebene oder abgefragte erste Identifikationsinformation und/oder eine daraus abgeleitete Information an die Zentralstelle. Die Zentralstelle übermittelt eine Benutzer-Identifikationsnachricht (z.B. mPIN) an die der Benutzer-Identifikationsinformation zugeordnete Telekommunikationsnummer, falls der Benutzer basierend auf der übermittelten ersten Identifikationsinformation und/oder der daraus abgeleiteten Information durch die Zentralstelle erfolgreich identifiziert wird. Die Akzeptanzstelle fordert den Benutzer auf, die übermittelte Benutzer-Identifikationsnachricht einzugeben. Der Benutzer wird anhand einer zweiten Identifikationsinformation authentifiziert und zum Ausführen der Transaktion berechtigt, falls die von dem Benutzer der Akzeptanzstelle eingegebene Benutzer-Identifikationsnachricht der von der Zentralstelle übermittelten Benutzer-Identifikationsnachricht entspricht.

## Beschreibung

Die vorliegende Anmeldung beansprucht die Priorität der Deutschen Patentanmeldung Nr. 10 2011 103 292.8 "Verfahren und Diensterechner sowie System zur kartenlosen Authentifizierung", angemeldet am 26. Mai 2011, deren gesamter Inhalt hiermit im Wege der Bezugnahme ausdrücklich mit beinhaltet sei.

### Gebiet der Erfindung

Die Erfindung betrifft ein Verfahren zur kartenlosen Authentifizierung eines Benutzers gegenüber einer Akzeptanzstelle, beispielsweise einem Geld- oder Bankautomaten oder einem Kassenterminal, die mit einer Zentralstelle kommuniziert.

### Hintergrund der Erfindung

Geld- oder Bankautomaten haben als Identifizierungsmittel üblicherweise ein Kartenlesegerät, mit dessen Hilfe sich ein Benutzer über eine Bankkarte identifizieren kann. Dies erfolgt üblicherweise durch Eingabe einer Geheimzahl (PIN). Die Identifizierungsdaten von der Bankkarte und die PIN werden über eine gesicherte Datenverbindung an eine Zentralstelle übertragen, beispielsweise einen Diensterechner (Host) eines Kreditinstituts. Dort werden die Identifizierungsdaten und die PIN überprüft. Im Falle einer erfolgreichen Identifizierung und Authentifizierung des Benutzers wird der Benutzer zum Ausführen der gewünschten Transaktion berechtigt, beispielsweise einer Geldauszahlung, Geldeinzahlung, Banküberweisung oder Erstellung eines Kontoauszugs.

Mit der zunehmenden Verbreitung von bargeldlosen Zahlungsverfahren wurden ähnliche Authentifizierungsverfahren auch bei Kassenterminals, beispielsweise in Supermärkten, eingeführt.

Dabei spielt die Sicherheit der Identifizierung und der Transaktion eine herausragende Rolle. Ein zunehmendes Problem stellt dabei insbesondere das sogenannte Skimming dar, womit versucht wird, sich Kartendaten und die vorgenannten Identifizierungsmittel zu erschleichen. Hierzu ist das Auslesen der Kartendaten, die im Magnetstreifen der Bankkarte gespeichert sind, und der Identifizierungsmittel erforderlich.

US 2007/0175978 A1 offenbart ein System und Verfahren für gesicherte wireless Zahlungstransaktionen. Ein Nutzer, der den Dienst nutzen will, gibt eine PIN in ein mobiles Telekommunikations-Endgerät ein und sendet die PIN beispielsweise als Text-Nachricht an eine Zentralstelle. Die Zentralstelle authentifiziert den Nutzer mit Hilfe der PIN und zumindest einer weiteren Information, nämlich einer Gerät-Identifikationsinformation, die dem mobilen Telekommunikations-Endgerät des Nutzers zugeordnet ist. Wenn der Nutzer authentifiziert ist, sendet die Zentralstelle einen Transaktionscode an das mobile Telekommunikations-Endgerät des Nutzers zurück, wo diese auf einem Display angezeigt wird. Mithilfe dieses Transaktionscodes wird die Zahlungstransaktion an einem Terminal des Bezahlsystems freigegeben.

US 2007/0203850 A1 offenbart ein System und Verfahren mit mehrstufiger Authentifizierung. Ein Nutzer wird zur Eingabe einer sekundären PIN aufgefordert, die mittels eines Zufallsgenerators erzeugt wird und an den Nutzer übermittelt wird, bevor dieser eine Transaktionen an einem Geldautomaten in Auftrag geben kann. Hierzu muss der Nutzer auf die Anforderung der sekundären PIN antworten und diese dem Geldautomaten eingeben. Eine Mobiltelefon-Nummer kann zur Freigabe der Transaktion herangezogen werden.

Wegen der Vielzahl im Umlauf befindlicher Bankkarten sollten veränderte Authentifizierungsverfahren zur Erhöhung der Sicherheit unter weitestgehender Nutzung der bestehenden Infrastruktur und Standards verändert werden.

### Zusammenfassung der Erfindung

Aufgabe der vorliegenden Erfindung ist die Bereitstellung eines Verfahrens zur kartenlosen Authentifizierung eines Benutzers gegenüber einer Akzeptanzstelle, womit sich in einfacher Weise eine höhere Sicherheit erzielen lässt. Gemäß weiteren Gesichtspunkten der vorliegenden Erfindung sollen ferner ein hierfür ausgelegter Diensterechner (Host) als Zentralstelle, eine hierfür ausgelegte Akzeptanzstelle und ein hierfür ausgelegtes System bereitgestellt werden.

Diese Aufgaben werden durch ein Verfahren nach Anspruch 1, einen Diensterechner nach Anspruch 11, eine Akzeptanzstelle nach Anspruch 14 sowie durch ein System nach Anspruch 15 gelöst. Weitere vorteilhafte Ausführungsformen sind Gegenstand der rückbezogenen Unteransprüche.

Ein Verfahren zur kartenlosen Authentifizierung eines Benutzers gegenüber einer Akzeptanzstelle gemäß der vorliegenden Erfindung zum Ausführen einer Transaktion an der oder mittels der Akzeptanzstelle wird in einer Systemumgebung mit einer Zentralstelle, insbesondere einem Diensterechner (Host), wo für die Benutzer jeweils eine eindeutige Benutzer-Identifikationsinformation, eine Telekommunikationsnummer sowie Kartendaten hinterlegt sind, mit einer Mehrzahl von Akzeptanzstellen, beispielsweise Bank- oder Geldautomaten oder Kassenterminals, und mit einer gesicherten Kommunikationsverbindung zwischen der Zentralstelle und den jeweiligen Akzeptanzstellen ausgeführt.

Dabei gibt der Benutzer der Akzeptanzstelle zunächst eine erste Identifikationsinformation ein oder diese wird von der Akzeptanzstelle bevorzugt automatisch abgefragt, beispielsweise wenn sich der Benutzer der Akzeptanzstelle in geeigneter Weise nähert. Bei dieser ersten Identifikationsinformation kann es sich insbesondere um eine numerische oder alphanumerische Identifikationsinformation handeln, die dem Benutzer von der Zentralstelle nach erfolgreicher Registrierung dort zur Verfügung gestellt wurde und die einfach erinnerbar und in die Akzeptanzstelle eingebbar ist, beispielsweise über eine Tastatur, wie beispielsweise ein EPP (Encrypting PIN Pad, also ein verschlüsselndes Geheimzahl-Tastenfeld), wie dieses beispielsweise an Geldautomaten, POS-Terminals und Überweisungsterminals vorhanden ist. Diese Benutzer-Identifikationsinformation kann auch auf einem Identifikationsmittel hinterlegt sein, das von dem Benutzer mitgeführt wird und ausgelegt ist, um die erste Identifikationsinformation automatisch auf Anfrage durch die Akzeptanzstelle an diese zu übermitteln, beispielsweise drahtlos bzw. über Funk. In einem ersten Schritt des Verfahrens übermittelt die Akzeptanzstelle die so eingegebene erste Identifikationsinformation und/oder eine daraus abgeleitete Information, bevorzugt abgeleitet mittels einer vorbestimmten Rechenvorschrift, über eine gesicherte Kommunikationsverbindung an die Zentralstelle.

Die Zentralstelle ermittelt dann basierend auf der so übermittelten ersten Identifikationsinformation und/oder der daraus abgeleiteten Information, ob der Benutzer erfolgreich identifiziert werden kann. Hierzu werden beispielsweise übliche Identifikationsverfahren eingesetzt, beispielsweise ein Vergleich der übermittelten ersten Identifikationsinformation mit der bei der Zentralstelle für den Benutzer hinterlegten Benutzer-Identifikationsinformation. Wenn der Benutzer anhand der ersten Identifikationsinformation bei der Zentralstelle erfolgreich identifiziert werden kann, so übermittelt die Zentralstelle eine Benutzer-Identifikationsnachricht an diejenige Telekommunikationsnummer, die der Benutzer/Identifikationsinformation zugeordnet ist und bei der Zentralstelle für den erfolgreich identifizierten Benutzer hinterlegt ist.

Ferner fordert die Akzeptanzstelle den Benutzer auf, die an diesen übermittelte Benutzer-Identifikationsnachricht einzugeben. Hierzu kann die Akzeptanzstelle von der Zentralstelle nach erfolgreicher Identifizierung des Benutzers eine Nachricht erhalten, welche die erfolgreiche Identifikation bestätigt und die Aufforderung auslöst. Nach Eingabe dieser übermittelten Benutzer-Identifikationsnachricht erfolgt eine Authentifizierung des Benutzers anhand einer zweiten Identifikationsinformation, die beispielsweise der dem Benutzer bzw. dessen Bankkarte zugeordneten PIN entspricht. Bevorzugt wird hierzu die von dem Benutzer auf Anforderung in die Akzeptanzstelle eingegebene Benutzer-Identifikationsnachricht an die Zentralstelle übermittelt, wo diese mit der Benutzer-Identifikationsnachricht verglichen wird, die an die dem Benutzer zugeordnete Telekommunikationsnummer übermittelt wurde. Wird eine Übereinstimmung festgestellt, so wird dies der Akzeptanzstelle mitgeteilt und bestätigt und diese kann dann in der üblichen Weise den Benutzer weiter anhand der zweiten Identifikationsinformation identifizieren, beispielsweise anhand der von dem Benutzer weiter eingegebenen PIN und unter Verwendung üblicher Identifikationsschritte. Ferner können von der Zentralstelle hierzu auch die Kartendaten des in dem ersten Schritt identifizierten Benutzers übermittelt werden, die dann für die Authentifizierung des Benutzers anhand der von diesem einzugebenden zweiten Identifikationsinformation in der üblichen Weise herangezogen werden.

Vorteilhaft an diesem Verfahren ist, dass die Authentifizierung des Benutzers kartenlos, jedoch unter weitestgehender Nutzung der bestehenden Infrastruktur (Bankkarte mit PIN; Diensterechner bzw. Host mit den dort hinterlegten Daten für den Benutzer) eingesetzt werden kann. Da keine Kartendaten eines Magnetstreifens oder ähnliche Informationen aus der Bankkarte ausgelesen werden müssen, ist eine bedeutende Schwachstelle gegenüber üblicher Skimming-Angriffen ausgeschaltet. Selbst wenn die dem Benutzer zugeordnete Telekommunikationsnummer in unberechtigter Weise verwendet würde, beispielsweise durch gleichzeitige Entwendung des Mobiltelefons des Benutzers, so bestehen weitere Sicherheitsschwellen, die eine unberechtigte Ausführung der Transaktion verhindern können. Denn Ausgangspunkt einer erfolgreichen Authentifizierung ist weiterhin die Eingabe der ersten Identifikationsinformation, die dem Benutzer vertraulich zur Verfügung gestellt wurde, beispielsweise per gesonderter E-Mail oder Post oder in Gestalt eines Bankkarten-Aufldebers mit Identifizierungsfunktion, die dem unberechtigten Benutzer jedoch nicht ohne Weiteres zugänglich ist. Denn ein unberechtigter Benutzer könnte zwar das Mobiltelefon oder dergleichen des berechtigten Benutzers entwenden, wäre dann jedoch noch immer nicht in Kenntnis der diesen identifizierenden Benutzer-Identifikationsinformation gelangt. Ferner bestehen bei den meisten Telekommunikations-Endgeräten, die einer Telekommunikationsnummer zugeordnet sind, beispielsweise Mobiltelefonen, Smartphones oder auch Tablet-Rechnern mit Telefon-Funktionalität, weitere Sicherheitsbarrieren, beispielsweise Geräte-Passwörter. Ferner können Berechtigungsmittel zur Nutzung solcher Telekommunikations-Endgeräte im Falle eines Diebstahls leicht ganz gesperrt werden, beispielsweise durch Sperrung der SIM-Karte oder Sperrung der Telekommunikationsnummer. Dies kann zentral erfolgen, beispielsweise auch von der zum Ausführen des Verfahrens nach der vorliegenden Erfindung zuständigen Zentralstelle oder ausgelöst durch dise.

Gemäß einer bevorzugten Ausführungsform wird die Benutzer-Identifikationsnachricht von der Zentralstelle über einen Telekommunikationsdienst an ein mobiles Telekommunikations-Endgerät übermittelt, das der bei der Zentralstelle für den Benutzer hinterlegten Telekommunikationsnummer entspricht. Ganz besonders bevorzugt handelt es sich bei der Telekommunikationsnummer um eine Telefonnummer eines Mobiltelefons, Smartphones, Tablet-Rechners mit Telefon-Funktionalität oder dergleichen. Derartige mobile Telekommunikations-Endgeräte werden von dem Benutzer praktisch ständig mit sich geführt und stehen somit einer Authentifizierung stets zur Verfügung. Zur Übermittlung der Benutzer-Identifikationsnachricht kann dabei insbesondere ein mobiler Kurznachrichtendienst eingesetzt werden.

Eine besonders einfache Nutzung kann dabei dann realisiert werden, wenn die Benutzer-Identifikationsnachricht eine SMS mit numerischer oder alphanumerischer Information ist. Auch ältere Menschen sind heutzutage mit derartigen mobilen Kurznachrichtendiensten vertraut, so dass eine kartenlose Authentifizierung auch älterer Benutzer erfindungsgemäß ohne Weiteres möglich ist. Zur Eingabe der ersten Identifikationsinformation muss der Benutzer also einfach nur die an sein Mobiltelefon oder dergleichen übermittelte Kurznachricht lesen und die darin enthaltene numerische oder alphanumerische Information der Akzeptanzstelle eingeben, beispielsweise über ein EPP. Selbstverständlich können mittels mobiler Kurznachrichtendienste auch komplexere Benutzer-Identifikationsnachrichten übermittelt werden. Gemäß weiteren Gesichtspunkten der vorliegenden Erfindung denkbar ist somit auch die Übermittlung zusätzlicher oder alternativer graphischer Informationen, insbesondere von Identifikations-Matrixcodes, die nach Darstellung auf dem Display des mobilen Telekommunikations-Endgeräts und Auslesen der Anzeige durch ein optisches Erfassungs- oder Lesegerät der Akzeptanzstelle als erste Identifikationsinformation herangezogen werden kann.

Grundsätzlich geeignet ist gemäß einem weiteren Gesichtpunkt der vorliegenden Erfindung jedoch auch die Übermittlung der Benutzer-Identifikationsnachricht an ein mobiles Telekommunikations-Endgerät des Benutzers mittels drahtloser internetbasierter Telekommunikationsdienste, insbesondere in Form einer E-Mail mit numerischer oder alphanumerischer Information, ähnlich zu der vorgenannten SMS, und/oder weiterer graphischer Identifikationsinformation, beispielsweise in Gestalt eines Identifikations-Matrixcodes. Bei einer solchen Ausführungsform wäre der Benutzer bei der Zentralstelle zusätzlich unter Hinterlegung einer diesem zugeordneten IP-Adresse registriert. Zwar lassen sich mittels internetbasierter Telekommunikation übertragene Nachrichten auf beliebigen Browsern und Nachrichtenprogrammen abrufen und darstellen. Grundsätzlich denkbar ist jedoch, dass mittels weiterer Sicherungsmechanismen, die auch in das Telekommunikations-Endgerät, die SIM-Karte und/oder Software des Benutzers integriert sein kann, und/oder Verschlüsselungsalgorithmen eine ausreichende Sicherheit gewährleistet werden kann, um die Benutzer-Identifikationsnachricht auch mittels eines internetbasierten Telekommunikationsdienstes zu übermitteln.

Gemäß einer weiteren bevorzugten Ausführungsform wird die Benutzer-Identifikationsinformation dem Benutzer durch Übereignung eines elektronischen Identifikationsmittels zur Verfügung gestellt, beispielsweise mittels Post oder Postident-Verfahren, beispielsweise in Form eines Chips oder RFID-Tags, der von dem Benutzer mitgeführt werden kann, beispielsweise auch auf einer Bank- oder Bezahlkarte, und der für einen kontaktlosen Austausch von Daten mit der Akzeptanzstelle ausgelegt ist. Vorteilhaft ist, dass die Abfrage der ersten Identifikationsinformation durch die Akzeptanzstelle auch automatisch ausgeführt werden kann, insbesondere kontaktlos, beispielsweise dann, wenn sich der Benutzer bis auf einen vorbestimmten Mindestabstand der Akzeptanzstelle genähert hat. Dieser Abstand kann durch geeignete drahtlose Kommunikationsprotokolle und -standards in einfacher Weise festgestellt werden. Ganz besonders bevorzugt erfolgt der kontaktlose Austausch von Daten mit der Akzeptanzstelle zur Eingabe der ersten Identifikationsinformation mittels Funk-Standardverfahren, beispielsweise nach dem NFC-Standard (NFC für Near Field Communication).

Der Chip oder RFID-Tag wird dem Benutzer dabei erst nach einer erfolgreichen Registrierung bei der Zentralstelle von dieser zur Verfügung gestellt. Gemäß einem weiteren Gesichtspunkt der vorliegenden Erfindung kann dies insbesondere auch in Gestalt eines Aufklebers für eine von dem Benutzer bereits genutzte Bezahl- oder Bankkarte erfolgen, insbesondere eines Aufklebers, der für eine Funk-Kommunikation nach dem NFC-Standard ausgelegt ist.

Gemäß einem weiteren bevorzugten Gesichtspunkt handelt es sich bei der von dem Benutzer einzugebenden zweiten Identifikationsinformation um eine diesem zugeordnete statische Information, die auch für andere Identifikations- oder Authentifizierungsverfahren geeignet und genutzt wird, insbesondere eine den Kartendaten des Benutzers eindeutig zugeordnete PIN (persönliche Identifikationsnummer). Auch ältere Benutzer sind mit PIN-basierten Identifikationsverfahren vertraut, so dass das erfindungsgemäße Verfahren auch unter Nutzung bestehender Infrastruktur und Identifikationsverfahren eingesetzt werden kann.

Zur Eingabe der ersten Identifikationsinformation und/oder der zweiten Identifikationsinformation kann die Akzeptanzstelle dabei insbesondere über ein Encrypting PIN-Pad (verschlüsselndes Geheimzahl-Tastenfeld) zur Eingabe einer persönlichen Geheimzahl (PIN) verfügen. Grundsätzlich denkbar sind jedoch ergänzend oder alternativ auch graphische Eingabeverfahren, beispielsweise durch Anzeigen eines Identifikations-Matrixcodes, der auf einem Display eines mobilen Telekommunikations-Endgeräts des Nutzers angezeigt wird.

Bei der Akzeptanzstelle kann es sich insbesondere um einen Bank- oder Geldautomaten, jedoch auch um ein Bezahlterminal eines Kassensystems handeln, das auch über eine Schnittstelle, beispielsweise USB oder gesicherte Schnittstelle, mit einem bereits bestehenden Kassenterminal verbunden sein kann, das seinerseits über eine gesicherte Kommunikationsverbindung mit einem Diensterechner in Verbindung steht.

Wie vorstehend ausgeführt, betrifft ein weiterer Gesichtspunkt der vorliegenden Erfindung eine Software zur Ausführung des vorgenannten Verfahrens, wenn deren Software-Codeabschnitte von Prozessoren der Akzeptanzstelle und des Diensterechners ausgeführt werden.

Gemäß einem weiteren Gesichtspunkt der vorliegenden Erfindung wird ferner ein Diensterechner als Zentralstelle zur Ausführung des vorgenannten Verfahrens bereitgestellt. Dem Diensterechner ist dabei eine Datenbank zugeordnet, um zumindest die Benutzer-Identifikationsinformation, die Telekommunikationsnummer und Kartendaten des Benutzers zu speichern, sofern dieser von der Zentralstelle erfolgreich registriert wurde. Dem Diensterechner ist ferner ein Schnittstellenmodul zur Kommunikation mit der Akzeptanzstelle über einen vertraulichen Kanal sowie zur Übermittlung von Information, insbesondere der ersten Identifikationsinformation, an die dem Benutzer zugeordnete und in der Datenbank hinterlegte Telekommunikationsnummer über einen Telekommunikationsdienst zugeordnet. Ferner verfügt der Diensterechner über eine Authentifizierungseinheit, die zum Ausführen des vorgenannten Verfahrens ausgelegt ist.

Gemäß einem weiteren Gesichtspunkt der vorliegenden Erfindung wird ferner eine Akzeptanzstelle bereitgestellt, die zur kartenlosen Authentifizierung eines Benutzers gemäß dem vorstehenden Verfahren ausgelegt ist.

Ein weiterer Gesichtspunkt der vorliegenden Erfindung betrifft ferner ein System, das zur Ausführung des vorgenannten Verfahrens zur kartenlosen Authentifizierung eines Benutzers gegenüber einer Akzeptanzstelle ausgelegt ist.

### Figurenübersicht

Nachfolgend wird die Erfindung in beispielhafter Weise und unter Bezugnahme auf die beigefügten Zeichnungen beschrieben werden, woraus sich weitere Vorteile, Merkmale und zu lösende Aufgaben ergeben werden. Es zeigen:
- Fig. 1: ein schematisches Ablaufdiagramm eines Verfahrens zur kartenlosen Authentifizierung eines Benutzers nach der vorliegenden Erfindung;
- Fig. 2: ein System mit einem Bank- oder Geldautomaten zur Ausführung des erfindungsgemäßen Verfahrens gemäß einem ersten Gesichtspunkt der vorliegenden Erfindung;
- Fig. 3: ein System mit einem Kassenterminal zum Ausführen eines erfindungsgemäßen Verfahrens gemäß einem zweiten Gesichtspunkt der vorliegenden Erfindung; und
- Fig. 4: in einem Blockdiagramm Komponenten eines Diensterechners zum Ausführung des erfindungsgemäßen Verfahrens.

In den Figuren bezeichnen identische Bezugszeichen identische oder im Wesentlichen gleich wirkende Elemente oder Elementgruppen.

### Ausführliche Beschreibung von bevorzugten Ausführungsbeispielen

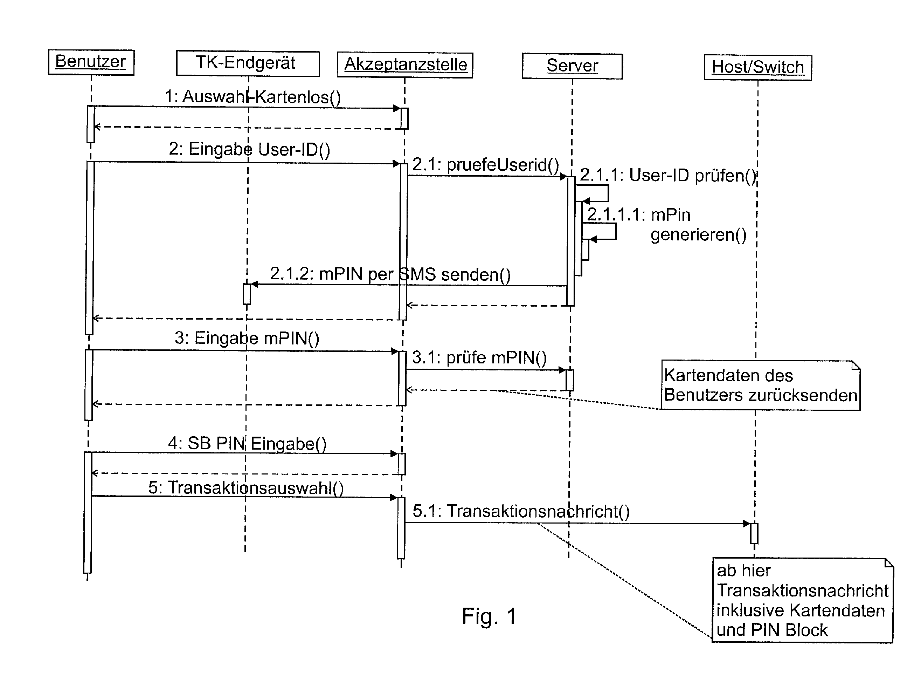

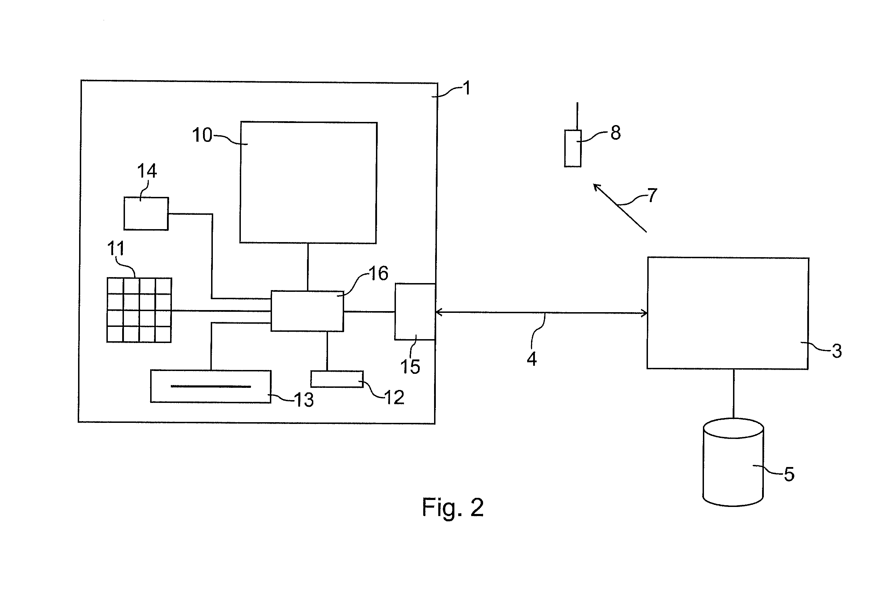

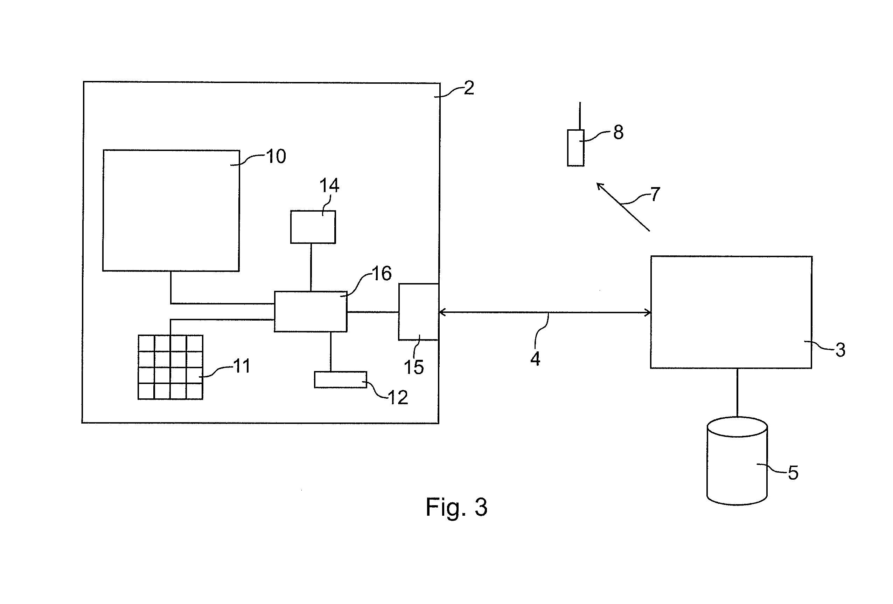

Die Fig. 1 verdeutlicht schematisch den Ablauf einer Transaktion an einer Akzeptanzstelle, beispielsweise einem Bank- oder Geldautomaten oder einem Bezahlterminal eines Kassensystems. Hierzu muss der Benutzer zunächst bei einer Zentralstelle (Server) erfolgreich registriert werden. Dies erfolgt über irgendeinen geeigneten Kanal, beispielsweise schriftlich, am Bankschalter, mittels Postident-Verfahren etc., wobei die hierzu erforderlichen Informationen abgefragt und bei der Zentralstelle abgelegt werden, unter Zuordnung zu dem Nutzer, insbesondere einer Benutzer-Identifikationsinformation (nachfolgend auch User-ID genannt), einer dem Benutzer zugeordneten Telekommunikationsnummer und von Kartendaten der von dem Benutzer verwendeten Bank- oder Bezahlkarte. Idealerweise ist der Benutzer bei der Zentralstelle ergänzend über eine Kontoverbindung registriert und die Zentralstelle Teil eines Bankingsystems eines Geldinstituts. Die dem Benutzer zugeordneten Daten werden in einer Datenbank 5 (vgl. Fig. 2 und 3) der Zentralstelle gespeichert, unter Zuordnung zu dem Benutzer. Daten des Benutzers können bei der Zentralstelle natürlich auch geändert werden, beispielsweise die Telekommunikationsnummer oder die Benutzer-Identifikationsinformation, jedoch nur in vertraulicher Weise und Nutzung gesicherter Verfahren, beispielsweise auch an einem Bankschalter oder dergleichen.

Die Benutzer-Identifikationsinformation wird dem Benutzer nach erfolgreicher Registrierung von der Zentralstelle zur Verfügung gestellt, beispielsweise in Form von numerischer oder alphanumerischer Information, beispielsweise als persönliche Geheimzahl (PIN), wobei die Übermittlung dieser an den Benutzer beispielsweise per E-Mail, Post, SMS erfolgen kann. Alternativ oder ergänzend kann die Benutzer-Identifikationsinformation auch in Gestalt elektronisch auslesbarer Information und Komponenten bereitgestellt werden, insbesondere in Form eines von dem Benutzer mitgeführten Chips oder RFID-Tags zum kontaktlosen Austausch von Daten mit der Akzeptanzstelle. Insbesondere können die Daten und Benutzer-Identifikationsinformation auch als Aufkleber für eine von dem Benutzer mitgeführte Bank- oder Bezahlkarte zur Verfügung gestellt werden. Ein solcher Chip bzw. RFID-Tag kann insbesondere für eine drahtlose Kommunikation nach dem NFC-Standard ausgelegt sein.

Für eine Nutzung der Akzeptanzstelle muss der Benutzer zunächst authentifiziert und zur Ausführung einer Transaktion berechtigt werden. Hierzu erfolgt in dem Schritt 1: (Auswahl-Kartenlos) eine kartenlose Eingabe oder Abfrage einer ersten Identifikationsinformation, beispielsweise der User-ID. Beispielsweise gibt der Benutzer über ein EPP eines Geld- oder Bankautomaten die diesem zur Verfügung gestellte Benutzer-Identifikationsinformation als erste Identifikationsinformation ein. Oder die auf einem Chip oder RFID-Tag hinterlegte Benutzer-Identifikationsinformation wird an die Akzeptanzstelle drahtlos übermittelt, beispielsweise nach dem NFC-Standard, insbesondere erst nach Annäherung bis auf einen vorbestimmten Mindestabstand, der gemäß einer bevorzugten Ausführungsform kleiner als etwa 10 cm sein kann, wobei der Datenaustausch zwischen Chip bzw. RFID-Tag und Akzeptanzstelle aktiv-aktiv oder auch aktiv-passiv erfolgen kann. Die Verwendung des NFC-Standards hat sich auch deshalb als vorteilhaft erwiesen, da NFC-fähige Mobiltelefone in großem Umfang auf dem Markt erhältlich sind und insbesondere das Betriebssystem Android von Google NFC unterstützen soll, aber auch andere Anbieter, wie beispielsweise Apple oder Samsung zukünftig NFC unterstützen wollen. Die drahtlose Kommunikation folgt dabei in einem geeigneten Frequenzbereich von beispielsweise 13,56 MHz.

Alternativ kann als erste Identifikationsinformation auch eine graphische Information herangezogen werden, beispielsweise ein Identifikations-Matrixcode, der auf einem Display eines mobilen Telekommunikations-Endgeräts des Benutzers angezeigt wird und einem graphischen Eingabefeld bzw. einer optischen Erfassungseinrichtung der Akzeptanzstelle dargeboten wird.

Nach Eingabe oder Übermittlung dieser ersten Identifikationsinformation (Schritt 2: Eingabe User-ID) wird diese Information und/oder eine daraus nach einer vorbestimmten Rechenvorschrift abgeleitete bzw. weiterverarbeitete Information über eine gesicherte Kommunikationsverbindung 4 (vgl. Fig. 2) an die Zentralstelle bzw. den Diensterechner übermittelt, wo basierend auf der übermittelten ersten Identifikationsinformation und/oder der daraus abgeleiteten Information und anhand der bei der Zentralstelle für den Benutzer hinterlegten Daten festgestellt wird, ob der Benutzer erfolgreich identifiziert werden kann (Schritte 2.1 "Prüfe User-ID" und 2.1.1 "User-ID prüfen").

Im Falle einer erfolgreichen Identifikation, also wenn die an die Zentralstelle übermittelte erste Identifikationsinformation mit der bei der Zentralstelle für den Benutzer hinterlegten

Information übereinstimmt bzw. dieser entspricht, erzeugt die Zentralstelle eine Benutzer-Identifikationsnachricht (Schritt 2.1.1.1: mPin generieren), die an die der Benutzer-Identifikationsinformation zugeordnete Telekommunikationsnummer mittels eines anderen Telekommunikationsdienstes übermittelt wird. Bei dieser Benutzer-Identifikationsnachricht kann es sich um eine numerische oder alphanumerische Information, aber auch ergänzend oder alternativ um graphische Identifikationsinformation, beispielsweise um einen Identifikations-Matrixcode, handeln. Ganz besonders bevorzugt wird eine mobile PIN (mPin) übermittelt. Diese Benutzer-Identifikationsnachricht wird über einen geeigneten Telekommunikationsdienst übermittelt, bevorzugt über einen mobilen Kurznachrichtendienst in Form einer SMS (Schritt 2.1.2 "mPIN per SMS senden").

Die an den Benutzer übermittelte Benutzer-Identifikationsnachricht wird auf dem mobilen Telekommunikations-Endgerät des Benutzers angezeigt und von dem Benutzer auf Aufforderung durch die Akzeptanzstelle der Akzeptanzstelle eingegeben, beispielsweise durch Eingabe der übermittelten mPIN über ein EPP eines Bank- oder Geldautomaten (Schritt 3: "Eingabe mPIN"). Grundsätzlich denkbar ist auch die Eingabe einer graphischen Identifikationsinformation, beispielsweise durch Anzeigen eines Identifikations-Matrixcodes auf einem Display des mobilen Telekommunikations-Endgeräts des Benutzers und Darbietung desselben gegenüber einem optischen Erfassungsfeld oder einer optischen Erfassungseinrichtung der Akzeptanzstelle.

Die so eingegebene Benutzer-Identifikationsnachricht wird von der Akzeptanzstelle an die Zentralstelle übermittelt, wo diese geprüft wird, also mit der Benutzer-Identifikationsnachricht verglichen wird, die an die dem Benutzer zugeordnete Telekommunikationsnummer übermittelt wurde (Schritt 3.1 "prüfe mPIN"). Falls die von dem Benutzer der Akzeptanzstelle eingegebene Benutzer-Identifikationsnachricht, die von der Akzeptanzstelle an die Zentralstelle über eine gesicherte Kommunikationsverbindung übermittelt wird, mit der von der Zentralstelle übermittelten Benutzer-Identifikationsnachricht übereinstimmt bzw. dieser entspricht, kann dann eine weitere Authentifizierung des Benutzers an der Akzeptanzstelle anhand einer zweiten Identifikationsinformation erfolgen, beispielsweise in der üblichen Weise durch Eingabe der persönlichen Geheimzahl (PIN) in dem Schritt 4 der Fig. 1 (Schritt 4: "SB Eingabe").

Hierzu können auch die Kartendaten des Benutzers über die gesicherte Kommunikationsverbindung an die Akzeptanzstelle übermittelt werden (Zwischenschritt: "Kartendaten des Benutzers zurücksenden"), wo dann die weitere Authentifizierung anhand der zweiten Identifikationsinformation erfolgt.

Nach erfolgreicher Authentifizierung im Anschluss an den Schritt 4 ("SB PIN Eingabe") kann dann von dem Benutzer die gewünschte Transaktion in dem Schritt 5 ("Transaktionsauswahl") beauftragt werden, beispielsweise eine Geldauszahlung, Banküberweisung, Kontoauszug-Ausdruckfunktion, aber auch Bezahlfunktion, beispielsweise an einem Kassenterminal. Die zu dieser Transaktion zugehörige Transaktionsnachricht wird dann in dem Schritt 5.1 ("Transaktionsnachricht") zurück an die Zentralstelle übermittelt, beispielsweise zu Abrechnungszwecken.

Die Fig. 2 zeigt ein System zur Ausführung des vorstehend beschriebenen Verfahrens mit einem ersten Beispiel für eine Akzeptanzstelle in Form eines Bank- oder Geldautomaten 1, der über ein Display 10, eine Tastatur 11 (auch EPP), ein Kartenlesegerät, eine Geldeingabe- und/oder Geldausgabeeinheit 13 und eine Kommunikations-Schnittstelle 15 zur Kommunikation mit der Zentralstelle 3 über eine gesicherte Kommunikationsverbindung 4 verfügt. Ergänzend kann der Geldautomat 1 auch über ein drahtloses Kommunikationsmodul 14 verfügen, zur drahtlosen Kommunikation mit einem von dem Benutzer mitgeführten Chip, RFID-Tag oder dergleichen. Diese Komponenten werden zentral von einem Prozessor 16 des Bank- oder Geldautomaten 1 gesteuert. Die Kommunikation über die Kommunikationsverbindung 4 erfolgt dabei gesichert, insbesondere mittels geeigneter Verschlüsselungsalgorithmen. Die Zentralstelle 3 umfasst einen Diensterechner und steht mit einer Datenbank 5 in Verbindung, in welcher die Daten der Benutzer des Diensteanbieters (beispielsweise Bankinstitut) hinterlegt sind. Die Zentralstelle 3 kann die vorgenannte Benutzer-Identifikationsnachricht 7 über eine gesonderte Kommunikationsverbindung, insbesondere einen mobilen Telekommunikationsdienst, an ein Telekommunikations-Endgerät 8 des Benutzers übermitteln, die der bei der Zentralstelle 3 für den jeweiligen Benutzer hinterlegten Telekommunikationsnummer entspricht. Bei dem Telekommunikations-Endgerät kann es sich bevorzugt um ein mobiles Telekommunikations-Endgerät handeln, beispielsweise ein Mobiltelefon, Smartphone, Tablet-PC mit Telefon-Funktionalität oder dergleichen.

Erschleicht sich ein unberechtigter Teilnehmer die Benutzer-Identifikationsinformation, kann jedoch nicht in den Besitz des Telekommunikations-Endgeräts 8 gelangen, so würde die bei Eingabe der Benutzer-Identifikationsinformation in die Akzeptanzstelle 1 und von der Zentralstelle an das Telekommunikations-Endgerät 8 übermittelte erste Identifikationsinformation bei dem tatsächlich berechtigten Benutzer ankommen, der dann vorgewarnt wäre, da er ja keine Transaktion ausführen wollte, und der deshalb entsprechende Gegenmaßnahmen ergreifen kann, beispielsweise Kartensperrung, Sperrung der SIM-Karte des Geräts 8, Verständigung der Polizei etc. Umgekehrt erfolgt die Identifikation des Benutzers an einem solchen Bank- oder Geldautomaten 1 kartenlos durch Eingabe der an das Gerät 8 übermittelten Benutzer-Identifikationsnachricht und einer zweiten Identifikationsinformation, insbesondere einer von dem Benutzer für anderweitige Bankdienstleistungen benutzten persönlichen Geheimzahl (PIN).

Die Fig. 3 zeigt ein weiteres Ausführungsbeispiel zur Ausführung des Authentifizierungsverfahrens an einem Terminal eines Kassensystems. Hierzu verfügt das Kassenterminal 2 oder eine mit diesem über eine bevorzugt gesicherte Kabelverbindung verbundene Dateneingabeeinrichtung über ein Display 10, eine Tastatur 11 zur Eingabe von numerischer oder alphanumerischer Information (auch als EPP), ein Kartenlesegerät 12 und eine Kommunikations-Schnittstelle 15, um mit der Zentralstelle 3 über eine gesicherte Kommunikationsverbindung 4 zu kommunizieren. Ergänzend kann das Kassenterminal 2 auch ein drahtloses Kommunikationsmodul 14 enthalten. Diese Komponenten werden von einem Prozessor 16 zentral gesteuert.

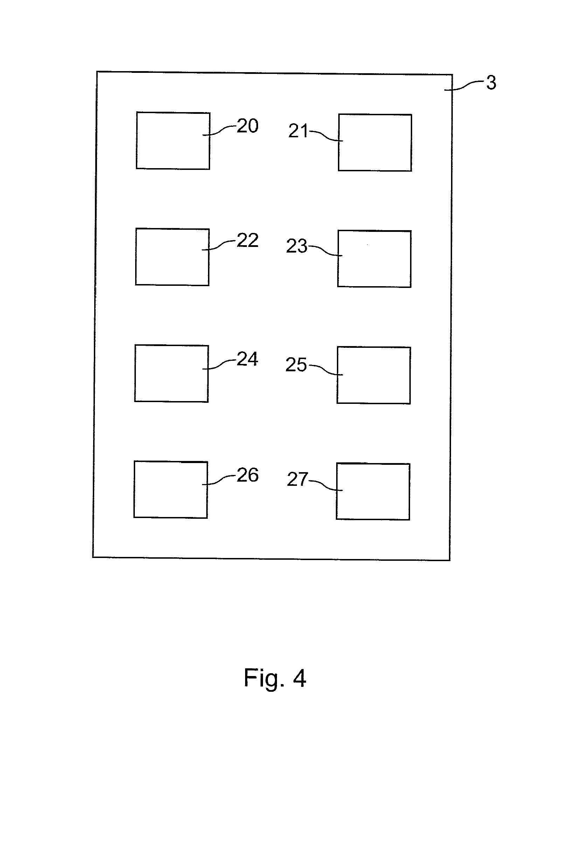

Die Fig. 4 zeigt wichtige Komponenten einer Zentralstelle, beispielsweise eines Diensterechners eines Bankinstituts. Die Zentralstelle 3 umfasst ein Schnittstellenmodul 20 zur Kommunikation mit der Akzeptanzstelle über eine gesicherte Kommunikationsverbindung 4 (vgl. Fig. 2 und 3) sowie mit dem Telekommunikations-Endgerät 8 des Benutzers über den weiteren Kommunikationskanal 7 (vgl. Fig. 2 und 3). Ferner umfasst die Zentralstelle 3 einen Generator für die Benutzer-Identifikationsnachricht 21, die an die dem Benutzer zugeordnete Telekommunikationsnummer übermittelt werden soll, beispielsweise in Form einer mPIN. Ferner verfügt die Zentralstelle 3 über eine Authentifizierungseinheit 23, die zur Identifikation und Authentifizierung des Benutzers nach dem vorgenannten Verfahren ausgelegt ist, eine Transaktionseinheit 24, welche die von der Akzeptanzstelle auszuführende Transaktion überwacht oder die von dieser zurückübermittelten Transaktionsnachrichten auswertet und weiterverarbeitet, eine Sperreinheit 25, welche die Akzeptanzstelle sperren kann, so dass im Falle einer nicht erfolgreichen Authentifizierung des Benutzers die Akzeptanzstelle gesperrt werden kann, so dass die angeforderte Transaktion nicht ausgeführt wird, einen zentralen Prozessor 26 sowie ein Schnittstellenmodul zur Kommunikation mit einer Datenbank oder weiteren Diensterechnern.

Das hier beschriebene Verfahren ist insbesondere dazu geeignet, eine schnelle und sichere Transaktion unter kartenloser Authentifizierung des Benutzers auszuführen, bevorzugt unter Zuhilfenahme von SMS-Nachrichten an ein Mobiltelefon eines bei der Zentralstelle registrierten Benutzers. Die beteiligten Personen müssen also lediglich ein geeignetes mobiles Telekommunikations-Endgerät mit sich führen und benutzen, um den beschriebenen Dienst nutzen zu können. Die Beantragung, Freischaltung sowie Transaktion über Mobilfunk-Telekommunikation eröffnet zahlreiche Realisierungsmöglichkeiten, die beispielhaft in der vorstehenden Beschreibung veranschaulicht worden sind. Weitere Ausführungsformen werden dem Fachmann beim Studium der vorstehenden Beschreibung ohne Weiteres ersichtlich sein und sollen Teil des Schutzbereichs der vorliegenden Erfindung sein.

### Bezugszeichenliste

- 1: Geldautomat
- 2: Kassenterminal
- 3: Server
- 4: (gesicherte) Kommunikationsverbindung
- 5: Datenbank
- 7: Identifikationsnachricht
- 8: Mobiles Telekommunikations-Endgerät
- 10: Display
- 11: Tastatur
- 12: Kartenlesegerät
- 13: Geldausgabeeinheit
- 14: Drahtloses Kommunikationsmodul
- 15: Kommunikations-Schnittstelle
- 16: Prozessor
- 20: Schnittstellenmodul
- 21: mPin-Generator
- 22: Datenbank
- 23: Authentifizierungseinheit
- 24: Transaktionseinheit
- 25: Sperreinheit
- 26: Zentraler Prozessor

## Patentansprüche

1. Verfahren zur kartenlosen Authentifizierung eines Benutzers gegenüber einer Akzeptanzstelle (1; 2), zum Ausführen einer Transaktion an der oder mittels der Akzeptanzstelle, wobei der Benutzer bei einer Zentralstelle (3) unter Zuordnung einer Benutzer-Identifikationsinformation, die dem Benutzer zur Verfügung steht, einer Telekommunikationsnummer und von Kartendaten registriert ist, bei welchem Verfahren
die Akzeptanzstelle (1; 2) eine von dem Benutzer der Akzeptanzstelle eingegebene oder von dieser abgefragte erste Identifikationsinformation und/oder eine daraus abgeleitete Information an die Zentralstelle (3) übermittelt;
die Zentralstelle (3) eine Benutzer-Identifikationsnachricht an die der Benutzer-Identifikationsinformation zugeordnete Telekommunikationsnummer übermittelt, falls der Benutzer basierend auf der übermittelten ersten Identifikationsinformation und/oder der daraus abgeleiteten Information durch die Zentralstelle erfolgreich identifiziert wird;
die Akzeptanzstelle (1; 2) den Benutzer auffordert, die übermittelte Benutzer-Identifikationsnachricht einzugeben; und
der Benutzer anhand einer zweiten Identifikationsinformation authentifiziert und zum Ausführen der Transaktion berechtigt wird, falls die von dem Benutzer der Akzeptanzstelle eingegebene Benutzer-Identifikationsnachricht der von der Zentralstelle (3) übermittelten Benutzer-Identifikationsnachricht entspricht.

2. Verfahren nach Anspruch 1, wobei die Benutzer-Identifikationsnachricht über einen Telekommunikationsdienst an ein mobiles Telekommunikations-Endgerät, das der Telekommunikationsnummer entspricht, übermittelt wird, und die Telekommunikationsnummer eine Telefonnummer oder eine IP-Adresse ist.

3. Verfahren nach Anspruch 2, wobei der Telekommunikationsdienst ein mobiler Kurznachrichtendienst ist und die Benutzer-Identifikationsnachricht eine SMS mit numerischer oder alphanumerischer Information ist, oder
wobei der Telekommunikationsdienst ein drahtloser internetbasierter Telekommunikationsdienst ist und die Benutzer-Identifikationsnachricht eine E-Mail mit numerischer oder alphanumerischer Information oder einem Identifikations-Matrixcode ist, die bzw. der auf dem mobilen Telekommunikations-Endgerät abrufbar und anzeigbar ist.

4. Verfahren nach einem der vorhergehenden Ansprüche, wobei die Benutzer-Identifikationsinformation eine numerische oder alphanumerische Benutzer-ID ist, die dem Benutzer nach erfolgreicher Registrierung bei der Zentralstelle mitgeteilt wird, insbesondere mittels E-Mail oder schriftlich.

5. Verfahren nach einem der Ansprüche 1 bis 3, wobei die Benutzer-Identifikationsinformation in einem von dem Benutzer mitgeführten Chip oder RFID-Tag hinterlegt ist, der für einen kontaktlosen Austausch von Daten mit der Akzeptanzstelle ausgelegt ist, insbesondere nach dem NFC-Standard (Near Field Communication), wobei der Chip oder RFID-Tag dem Benutzer bevorzugt erst nach der erfolgreichen Registrierung durch die Zentralstelle als Aufkleber für eine von diesem mitgeführte Bezahlkarte zur Verfügung gestellt wird.

6. Verfahren nach Anspruch 5, wobei eine Annäherung des Chips oder RFID-Tags an die Akzeptanzstelle (1; 2) bis auf weniger als einen vorbestimmten Mindestabstand von der Akzeptanzstelle als Kontaktaufnahme festgestellt wird, um eine Übermittlung der in dem Chip oder RFID-Tag hinterlegten Benutzer-Identifikationsinformation auszulösen, die als die erste Identifikationsinformation verwendet wird.

7. Verfahren nach einem der vorhergehenden Ansprüche, wobei die Zentralstelle (3) die an diese übermittelte erste Identifikationsinformation und/oder die daraus nach einer vorbestimmten Rechenvorschrift abgeleitete und an die Zentralstelle übermittelte Information mit der bei der Zentralstelle für den Benutzer hinterlegten Benutzer-Identifikationsinformation und/oder einer daraus nach der gleichen vorbestimmten Rechenvorschrift abgeleiteten Information vergleicht und den Benutzer nur im Falle einer Übereinstimmung erfolgreich identifiziert, wobei die Zentralstelle (3) eine erfolgreiche oder nicht-erfolgreiche Identifikation der Akzeptanzstelle bevorzugt durch Übermittlung einer Nachricht anzeigt und/oder bevorzugt die Kartendaten an die Akzeptanzstelle übermittelt, falls die Identifikation erfolgreich ist.

8. Verfahren nach einem der vorhergehenden Ansprüche, wobei die zweite Identifikationsinformation eine dem Benutzer zugeordnete statische Information ist, insbesondere eine den Kartendaten des Benutzers eindeutig zugeordnete PIN.

9. Verfahren nach einem der vorhergehenden Ansprüche, wobei die Akzeptanzstelle ein Bank- oder Geldautomat mit einem Encrypting-PIN-Pad (EPP) oder ein Bezahlterminal eines Kassensystems ist.

10. Software mit Software-Codeabschnitten, die eine Ausführung des Verfahrens nach einem der vorhergehenden Ansprüche veranlassen, wenn die Software-Codeabschnitte von Prozessoren ausgeführt werden.

11. Diensterechner als Zentralstelle (3) für ein System zur kartenlosen Authentifizierung eines Benutzers gegenüber einer entfernten Akzeptanzstelle (1; 2), insbesondere zum Ausführen des Verfahrens nach einem der Ansprüche 1 bis 9, mit
einer Datenbank (22) zum Speichern einer Benutzer-Identifikationsinformation, die dem Benutzer zur Verfügung steht, einer Telekommunikationsnummer und von Kartendaten, wobei der Benutzer bei der Zentralstelle (3) unter Zuordnung der Benutzer-Identifikationsinformation, der Telekommunikationsnummer und der Kartendaten registriert ist;
einem Schnittstellenmodul (20) zur Kommunikation mit der Akzeptanzstelle (1; 2) über einen vertraulichen Kanal (4) und zur Übermittlung von Information an die dem Benutzer zugeordnete Telekommunikationsnummer über einen Telekommunikationsdienst (7); und
einer Authentifizierungseinheit (23) zum Authentifizieren des Benutzers, um diesen zum Ausführen einer Transaktion an der oder mittels der Akzeptanzstelle (1; 2) zu berechtigen; wobei
die Authentifizierungseinheit (23) ausgelegt ist, um
einen Benutzer basierend auf einer von dem Benutzer der Akzeptanzstelle eingegebenen oder von dieser abgefragten ersten Identifikationsinformation und/oder einer daraus abgeleiteten Information, die an die Zentralstelle (3) übermittelt wird, zu identifizieren;
den Diensterechner (3) zu veranlassen, eine Benutzer-Identifikationsnachricht an die der Benutzer-Identifikationsinformation zugeordnete Telekommunikationsnummer über den Telekommunikationsdienst (7) zu übermitteln, falls der Benutzer basierend auf der übermittelten ersten Identifikationsinformation und/oder der daraus abgeleiteten Information erfolgreich identifiziert wird;
die Akzeptanzstelle (1; 2) über die Übermittelung der Benutzer-Identifikationsnachricht an die der Benutzer-Identifikationsinformation zugeordnete Telekommunikationsnummer zu informieren;
den Benutzer anhand einer zweiten Identifikationsinformation, die der Benutzer der Akzeptanzstelle (1; 2) nach Erhalt der Benutzer-Identifikationsnachricht und auf eine Aufforderung der Akzeptanzstelle hin eingibt, zu authentifizieren und zum Ausführen der Transaktion zu berechtigen, falls die von dem Benutzer der Akzeptanzstelle eingegebene und an den Diensterechner über den vertraulichen Kanal (4) übermittelte Benutzer-Identifikationsnachricht der von der Zentralstelle (3) übermittelten Benutzer-Identifikationsnachricht entspricht.

12. Diensterechner nach Anspruch 11, wobei das Schnittstellenmodul (20) ausgelegt ist, um die Benutzer-Identifikationsnachricht über den Telekommunikationsdienst (7) an ein mobiles Telekommunikations-Endgerät, das der Telekommunikationsnummer entspricht, zu übermitteln, wobei die Telekommunikationsnummer eine Telefonnummer oder eine IP-Adresse ist

13. Diensterechner nach Anspruch 11 oder 12, wobei die Authentifizierungseinheit (23) weiterhin ausgelegt ist, um die übermittelte erste Identifikationsinformation und/oder die daraus nach einer vorbestimmten Rechenvorschrift abgeleitete und übermittelte Information mit der in der Datenbank (22) für den Benutzer gespeicherten Benutzer-Identifikationsinformation und/oder einer daraus nach der gleichen vorbestimmten Rechenvorschrift abgeleiteten Information zu vergleichen und den Benutzer nur bei Übereinstimmung erfolgreich zu identifizieren, und/oder wobei die Authentifizierungseinheit (23) weiterhin ausgelegt ist, um eine erfolgreiche oder nicht-erfolgreiche Identifikation der entfernten Akzeptanzstelle (1; 2) durch Übermittlung einer Nachricht anzuzeigen und/oder die Kartendaten an die Akzeptanzstelle zu übermitteln, falls die Identifikation des Benutzers erfolgreich ist.

14. Akzeptanzstelle (1; 2), ausgelegt zur kartenlosen Authentifizierung eines Benutzers sowie zum Ausführen einer Transaktion an der oder mittels der Akzeptanzstelle, wobei der Benutzer bei einer Zentralstelle (3) unter Zuordnung einer Benutzer-Identifikationsinformation, die dem Benutzer zur Verfügung steht, einer Telekommunikationsnummer und von Kartendaten registriert ist, welche ausgelegt ist, um
eine von dem Benutzer der Akzeptanzstelle eingegebene oder von dieser abgefragte erste Identifikationsinformation und/oder eine daraus abgeleitete Information an die Zentralstelle (3) zu übermitteln;
den Benutzer aufzufordern, eine Benutzer-Identifikationsnachricht einzugeben, die an die der Benutzer-Identifikationsinformation zugeordnete Telekommunikationsnummer übermittelt wurde, falls der Benutzer basierend auf der übermittelten ersten Identifikationsinformation und/oder der daraus abgeleiteten Information durch die Zentralstelle erfolgreich identifiziert wird;
den Benutzer zur Eingabe einer zweiten Identifikationsinformation aufzufordern und den Benutzer anhand der zweiten Identifikationsinformation zu authentifizieren und zum Ausführen der Transaktion zu berechtigen, falls die von dem Benutzer der Akzeptanzstelle eingegebene Benutzer-Identifikationsnachricht der von der Zentralstelle (3) übermittelten Benutzer-Identifikationsnachricht entspricht, wobei
die Akzeptanzstelle (1; 2) bevorzugt ein Bank- oder Geldautomat mit einem Encrypting-PIN-Pad (EPP) oder ein Bezahlterminal eines Kassensystems ist.

15. System zur kartenlosen Authentifizierung eines Benutzers gegenüber einer Akzeptanzstelle (1; 2), zum Ausführen einer Transaktion an der oder mittels der Akzeptanzstelle, insbesondere zum Ausführen des Verfahrens nach einem der Ansprüche 1 bis 9, mit einer Zentralstelle (3), bei der der Benutzer unter Zuordnung einer Benutzer-Identifikationsinformation, die dem Benutzer zur Verfügung steht, einer Telekommunikationsnummer und von Kartendaten registriert ist, und mit zumindest einer Akzeptanzstelle (1; 2) zum Ausführen der Transaktion, wobei die jeweilige Akzeptanzstelle (1; 2) über einen vertraulichen Kanal (4) mit der Zentralstelle (3) kommuniziert, wobei
die jeweilige Akzeptanzstelle (1; 2) ausgelegt ist, um den Benutzer zur Eingabe einer ersten Identifikationsinformation aufzufordern oder diese automatisch abzufragen und um die eingegebene oder abgefragte erste Identifikationsinformation und/oder eine daraus abgeleitete Information an die Zentralstelle (3) über den vertraulichen Kanal (4) zu übermitteln;
die Zentralstelle (3) ausgelegt ist, um
eine Benutzer-Identifikationsnachricht an die der Benutzer-Identifikationsinformation zugeordnete Telekommunikationsnummer über den Telekommunikationsdienst (7) zu übermitteln, falls der Benutzer basierend auf der an die Zentralstelle (3) übermittelten ersten Identifikationsinformation und/oder der daraus abgeleiteten Information durch die Zentralstelle (3) erfolgreich identifiziert wird, und
um die jeweilige entfernte Akzeptanzstelle (1; 2) über die Übermittlung der Benutzer-Identifikationsnachricht an die der Benutzer-Identifikationsinformation zugeordnete Telekommunikationsnummer zu informieren;
die jeweilige Akzeptanzstelle (1; 2) weiterhin ausgelegt ist, um den Benutzer aufzufordern, die übermittelte Benutzer-Identifikationsnachricht einzugeben, und um die eingegebene Benutzer-Identifikationsnachricht an die Zentralstelle (3) zu übermitteln; und
die Zentralstelle oder die jeweilige Akzeptanzstelle weiterhin ausgelegt ist, um den Benutzer anhand einer zweiten Identifikationsinformation, die der Akzeptanzstelle (1; 2) eingegeben wird, zu authentifizieren und zum Ausführen der Transaktion zu berechtigen, falls die von dem Benutzer der Akzeptanzstelle eingegebene Benutzer-Identifikationsnachricht der von der Zentralstelle (3) übermittelten Benutzer-Identifikationsnachricht entspricht

16. System nach Anspruch 15, wobei die Benutzer-Identifikationsnachricht über den Telekommunikationsdienst (7) an ein mobiles Telekommunikations-Endgerät, das der Telekommunikationsnummer entspricht, übermittelt wird, wobei die Telekommunikationsnummer eine Telefonnummer oder eine IP-Adresse ist

17. System nach Anspruch 15 oder 16, wobei die Authentifizierungseinheit (23) weiterhin ausgelegt ist, um die übermittelte erste Identifikationsinformation und/oder die daraus nach einer vorbestimmten Rechenvorschrift abgeleitete und übermittelte Information mit der für den Benutzer bei der Zentralstelle (3) hinterlegten Benutzer-Identifikationsinformation und/oder einer daraus nach der gleichen vorbestimmten Rechenvorschrift abgeleiteten Information zu vergleichen und den Benutzer nur bei Übereinstimmung erfolgreich zu identifizieren, und/oder wobei
die Zentralstelle (3) weiterhin ausgelegt ist, um eine erfolgreiche oder nicht-erfolgreiche Identifikation der entfernten Akzeptanzstelle (1; 2) durch Übermittlung einer Nachricht anzuzeigen und/oder die Kartendaten an die Akzeptanzstelle zu übermitteln, falls die Identifikation des Benutzers erfolgreich ist.
